# EUROPEAN PATENT APPLICATION

(11) **EP 3 133 091 A1**
(43) Date of publication of application: **22.02.2017**
(21) Application number: 16183696.0
(22) Date of filing: 11.08.2016
(51) Int. Cl.: C08F 2/24, C08F 2/44, C08K 3/14

(54) **PREPARING POLYMER COMPOSITE PARTICLE BY MINIEMULSION POLYMERIZATION USING REACTIVE CO-STABILIZER**

(30) Priority: 15.08.2015 US 201514827274
(71) Applicant: King Abdulaziz City for Science and Technology, 11442 Riyadh (SA)
(72) Inventor: BASFAR, Ahmed, 11442 RIYADH (SA); JÄHNICHEN, Klaus, 01187 DRESDEN (DE); VOIT, Brigitte, 01187 DRESDEN (DE)
(74) Representative: Peguet, Wilfried

(57) **Abstract**

The present disclosure relates to a composition, comprising a monomer; a reactive co-stabilizer; a carbon black; a surfactant; and a filler, wherein the composition is used to prepare a polymer/carbon black composite particle by MEP technology along with a method for same. The reactive co-stabilizer as disclosed is methacrylate derivative containing a long alkyl chain R, with R consisting of 6-22 C atoms and being branched or linear, saturated and/or unsaturated such as stearyl methacrylate (SteaMA). The polymer/carbon black composite particle as prepared has an enhanced stability and low VOC as compared to a pure polymer prepared by MEP. Further, the prepared polymer can be used as basic resins in materials for toner applications.

## Description

### FIELD OF TECHNOLOGY

This disclosure relates generally to a composition of a polymerized toner and a method of preparing the same using miniemulsion polymerization (MEP) technology. Further, the disclosure also relates to a composition of a polymer/carbon black composite particle as a polymerized toner and a method of preparing the same using MEP technology.

### BACKGROUND

Nearly 40 years ago a special kind of emulsion polymerization was firstly reported: the miniemulsion polymerization (Ugelstad,*et al,* 1974). In this technique a co-stabilizer, sometimes also called hydrophobe, is used to retard the diffusion of monomer molecules from smaller droplets to larger ones (Ostwald ripening effect). Kinetically stable small monomer droplets are formed in the presence of co-stabilizer and the polymerization process can run in these droplets. Using this method it is possible to polymerize water insoluble monomers because there is no need to diffuse from the monomer droplets to the micelles like in emulsion polymerization. In most of MEP a droplet nucleation dominates. That means, the polymerization takes place inside the monomer droplets like in a suspension polymerization.

Beside the commonly used hydrophobic hexadecane (HD) as co-stabilizer in MEP a large variety of substances was used as co-stabilizer in MEP. However, there is still a lack of co-stabilizers in the process of MEP that can provide enhanced stability and low volatile organic content (VOC) to the polymer to be used in toner applications.

### SUMMARY

The present disclosure relates to a composition of a polymer/carbon black (CB) composite particle and a method of preparing the same. Further, the present disclosure relates to a composition of a polstyrene (PSt)/CB composite particle and a method of preparing the same by MEP technology.

In one embodiment, the present disclosure relates to a composition, comprising: a monomer, a reactive co-stabilizer, a CB, a surfactant and a filler, wherein the composition is used to prepare a polymer/CB composite particle. In another embodiment, the polymer/CB composite particle is prepared by MEP technology.

In one embodiment, the monomer as disclosed is styrene forming a polystyrene. In another embodiment, the polymer is a polystyrene or a polystyrene dominated copolymer.

In one embodiment, the reactive co-stabilizer is a methacrylate derivative whereas in another derivative, the reactive co-stabilizer is a methacrylate derivative containing a long alkyl chain R, with R consisting of 6-22 C atoms and being branched or linear, saturated and/or unsaturated such as a stearyl methacrylate (SteaMA).

In one embodiment, the polymer/CB composite particle as prepared is used as a basic resin. In another embodiment, the composite particle as prepared is used as a basic resin in a material used further for a toner application.

In one embodiment, the size of the composite particle is in the range of 20 nm to 1000 nm. In another embodiment, the size of the composite particle is less than 20 nm. In yet another embodiment, the size of the composite particle is in the range of 50 nm to 300 nm, wherein the reactive co-stabilizer is added in 0.5 to 15 mol%, preferably 2-7 mol%.

In one embodiment, the composite particle are prepared in the presence of a charge control agent (CCA). In another embodiment, the CCA is a bi-salicylate of aluminium (Al) or zirconium (Zr).

Thus, in one embodiment, the present disclosure relates to a method of preparing a polymer/CB composite particle by MEP technique using a fatty acid methacrylate as a co-stabilizer and in the presence of CCA whereas in another embodiment, a method of preparing a PSt/CB composite particle by MEP using a fatty acid methacrylate as a reactive co-stabilizer in the presence of bi-salicylate of Al or Zr is disclosed.

In one embodiment, the composite particle is obtained in the presence of 0.1 and 10 mol% of CCA with regard to St. In another embodiment, the composite particle is obtained in the presence of 1-5 mol% of CCA with regard to St.

In one embodiment, the composite particle as prepared has an enhanced stability, wherein the stability results from a covalent binding of co-stabilizer into the polymer matrix through copolymerization. In another embodiment, the composite particle as prepared has a low VOC. Enhanced stability is because of the fact that there are no volatile substances like the usually used hexadecane as hydrophobe in the composite. The advantage of using reactive hydrophobes is, that the hydrophobe is coupled to the polymer chain after the polymerization. The "classical" hydrophobe hexadecane can evaporate from the composite at higher temperatures. This evaporation can be avoided by the use of a reactive hydrophobe which can form a copolymer with the matrix polymer like poly(styrene) (PSt).

In most embodiments, the polymer is used in the polymer/CB composite particle preparation is a polystyrene or a polystyrene dominated copolymer.

The above mentioned summary presents a simplified version of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later. Other features will be apparent from the accompanying drawings and from the detailed description that follows.

### BRIEF DESCRIPTION OF DRAWINGS

Example embodiments are illustrated by way of example and not limitation in the figures of the accompanying drawings, in which like references indicate similar elements and in which:
Fig. 1 shows a SEM picture of PSt/CB composite (5 wt% CB) using SteaMA as co-stabilizer.
Fig. 2 shows a SEM picture of PSt/CB composite (8 wt% CB) using SteaMA as co-stabilizer.

Other features of the present embodiments will be apparent from the accompanying drawings and from the detailed description that follows.

### DETAILED DESCRIPTION

Although the present embodiments have been described with reference to specific example embodiments, it will be evident that various modifications and changes may be made to these embodiments without departing from the broader spirit and scope of the various embodiments.

The present disclosure describes a composition of a polymer/CB composite particle and a method of preparing the same by MEP in the presence of a methacrylate derivative containing a long alkyl chain R, with R consisting of 6-22 C atoms and being branched or linear, saturated and/or unsaturated (Formula 1) such as SteaMA (Formula 2).

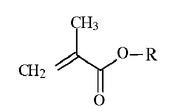

Formula 1 showing general structure of a reactive co-stabilizer.

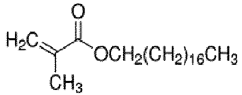

Formula 2 showing structure of stearyl methacrylate.

In a classical MEP, the HD is often used as co-stabilizer, having a relatively high boiling point and is found to evaporate at higher temperatures. This can be a drawback when using the co-stabilizer in preparing such polymer/CB composite particle, preferably PSt/CB or polystyrene copolymer/CB composite particles to be used in toner applications specially during the fixation process of polymer particles using high temperatures. Beside the commonly used HD as co-stabilizer in MEP a large variety of substances was used as co-stabilizer in MEP. The paper by Landfester (Landfester, 2003) gives an overview about the use of different co-stabilizers.

Further, Chern and Chan (Chern and Chan, 2007), reported the use of long chain alkyl methacrylates as co-stabilizer together with different ionic (SDS) or non-ionic surfactants (ethoxylated fatty alcohols or ethoxylated alkyl phenols) in MEP of St (Chern and Chan, 2007). It was found, that SteaMA was more efficient than dodecyl methacrylate (DMA) because of the differences in the water solubility of the monomer. A further advantage is the incorporation of the hydrophobic substance into the polymer chain. It was also reported, that the use of DMA resulted in dispersions with a broader particle size distribution then SteaMA. Beside SDS also nonionic surfactants based on ethoxylated fatty alcohols were investigated. SteaMA was also used for the miniemulsion polymerization of MMA instead that of St. So far, SteaMA was only used as hydrophobe for MEP of different monomers. But it was not described, that St can be also used for the preparation of composites of Carbon Black (CB) by MEP.

Bechthold (Bechthold, 2000) investigated other hydrophobic substances (cyclic siloxanes or olive oil) than HD as a co-stabilizer. Bunker (Bunker *et al,* 2003) reported the MEP of acrylated methyl oleates for pressure sensitive adhesives.

As shown by way of various examples in the present disclosure, a big advantage of using SteaMA as a co-stabilizer is the formation of copolymers with the monomer like St during MEP. At the end of the polymerization, the co-stabilizer is completely covalently bound in the copolymers. Consequently, a reduction of the VOC can be realized by the use of SteaMA instead of HD. A further advantage of the used SteaMA is the influence of the incorporated SteaMA units on the T_{g} of the polymer matrix of the final composite particles. The T_{g} of a PSt prepared by MEP in the presence of HD is usually in the range between 95 and 105 °C, depending on the content of low molecular weight substances.

### Preparation of CB composite using MEP technique

A number of studies have shown the preparation of CB composites by MEP technique. One such technique is by Landfester (Landfester *et al,* 2000) as also used in the present application. Co-stabilizer play an important role for the encapsulation process as they not only suppress the Ostwald ripening but also cover the surface of CB to prevent the formation of larger aggregates. The CB was sonicated together with the organic phase in the first step. Later, water and SDS were added and the sonication was repeated. Particles of 100 - 150 nm size were formed. The CB could be only detected by TEM after the melting of the particles. After the aging the particles at 120°C aggregates of CB in the size of between 30 and100 nm were detected. The latexes were analyzed by ultracentrifugation in a density gradient which was realized by different sucrose solutions. Unmodified CB could not be observed in any experiments. But it could be shown that the CB was not homogeneously distributed within the PSt. Furthermore, often pure PSt was also observed. The nature of the used co-stabilizer showed a crucial influence on the encapsulation result. Up to max. 8wt% CB could be encapsulated with this method.

Landfester (Landfester, 2001) reported the encapsulation of relatively large amount of CB using a further developed two step miniemulsion technique (Tiarks *et al,* 2001). Up to 80 wt% of CB can be encapsulated using this technique. It was described to prepare a stable dispersion of CB in water using surfactants like SDS (e.g. 15 wt% based on CB) first. The resulting particle size of the CB was about 90 - 140 nm. In a second part, a normal MEP recipe for the polymerization of St was used to prepare a miniemulsion containing St, and SDS. A custom-made polyurethane was preferentially used as co-stabilizer in these experiments. This special co-stabilizer showed good interactions with the CB surface and was closely adsorbed at the CB surface. Finally, the formed miniemulsion of St and the (stable) CB dispersion were mixed together in the appropriate amount and sonicated. After polymerization particles with a size 70 and 90 nm were obtained. This is in the range of the covalently linked CB clusters. Non-spherical particles were formed with a top layer of PSt (TEM). The application of this encapsulation technique was limited to only relatively high amounts of CB in the mixture.

Han (Han *et al,* 2010) also described an encapsulation process of CB by polystyrene using the miniemulsion approach. First, a surface modification of CB was performed by an oxidation process with KMn_{O4}. Then the formed OH groups were converted into esters by the reaction with oleic acid. The so modified CB was used in encapsulation processes by the miniemulsion technique. A stable dispersion of the modified CB was realized by sonication process in the presence of water/SDS/HD. The success of the encapsulation process was enhanced by increasing the ration of CB:St from 1:1up to 5:1. The samples with the high amounts of styrene showed that the excess of St formed pure PSt without any CB. The drawback from a practical point of view was the preparative effort of the surface modification of CB, especially the esterification of the OH groups with oleic acid and the extraction of unreacted oleic acid as purification step.

The commonly used low molecular weight co-stabilizers like HD or hydrophobic oils further have a drawback that they retain only physically bound in the products after the polymerization reaction. Finally, polymeric nanoparticles were obtained which still contain volatile substances. Despite the boiling point of HD is relatively high with about 287 °C, the thermogravimetric analysis of pure HD showed evaporation at temperatures up to 200°C with a Tₒₙₛₑₜ of 89°C and T₁₀% of 133°C (TGA under _{N2}, 10K/min). The liberation of volatile substances cannot be excluded in applications like printers where higher temperatures are not unusual. In order to reduce the VOC reactive co-stabilizers replace the "volatile" HD. The reactive co-stabilizer is incorporated by covalent bonds into the polymer chain after the polymerization. Furthermore, the formation of copolymers resulted in products with lower T_{g} like the original PSt. A lowering of T_{g} up to 62 °C was observed by modulated DSC for products with the highest content of SteaMA.

In toner applications so called CCA play an important role. Therefore, the formation of PSt/CB composites was studied in the presence of CCA. The investigated CCA were bi-salicylates of Al or Zr. The use of HD for the formation of composites particles did not give positive results in those formulations. Significant amount of unmodified CB was observed by SEM. But the replacement of HD by SteaMA showed an improvement of the quality of the formed composites. No unmodified CB was found by SEM investigations for both CCA types (examples 13 and 14 in Table 3; the compositions for example 13 and 14 are shown in Table 1). In all of the experiment a conversion of monomer >93% was obtained. Thus, the use of a reactive co-stabilizer like SteaMA instead of HD as the co-stabilizer in MEP of polymer/CB is of advantage especially for obtaining PSt composite particles with CB content relevant for toner application and in the presence of CCA.

Furthermore, St/CB composite formation with CB content up to 10 wt% is possible and the composite particles can be prepared in the presence of CCA. In that case, MEP of higher stability was obtained given further advantage for the preparation of technically relevant polymer particle composition for toner application.

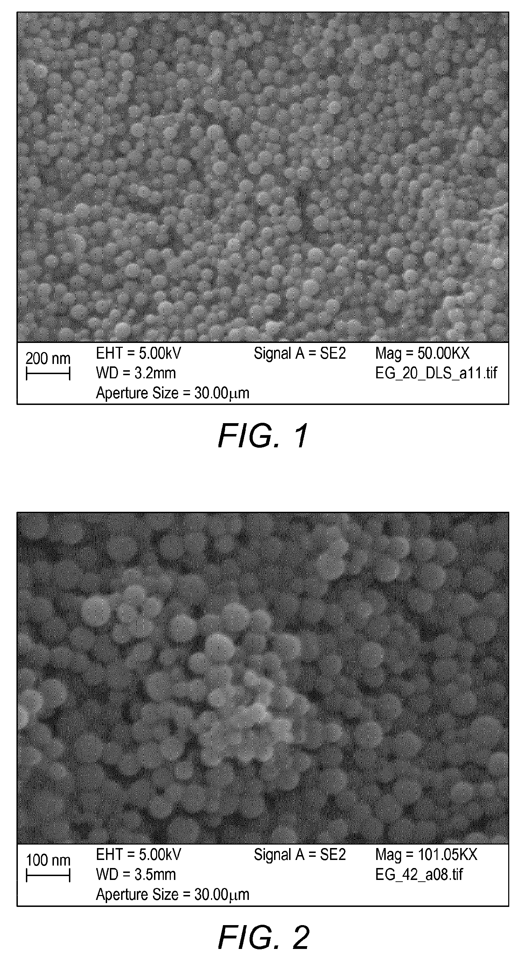

The content of CB was varied between 5 and 10 mass%. In all cases, and using various types of CB, stable composite particles were obtained with a particle size of >90 nm with often bimodal size distribution. High monomer conversions > 95% were obtained and the resulting polymers showed high molar masses with Mn > 100,000 g/mol (Table 3, Fig. 1 and Fig. 2).

### EXPERIMENTAL

The following samples describe the preparation of PSt/CB composites by MEP using fatty acid methacrylate, such as SteaMA, as a reactive co-stabilizer.

### Reagents and Materials

StMA was purchased from ABCR. Styrene, CTAB, Sodium styrene sulfonate, SDS (>99% Fluka), HD, 2,2'-Azobis(2-methylpropionitrile) (AIBN), Phosphorous pentoxide, calcium hydride, tetrahydrofurane, hexane, chloroform, sodium chloride, and hydroquinone were purchased. Hydroxyaluminium salicylate derivative (MEC-88) and Zirconium salicylate derivative (MEC-105) were purchased from Korean Material technology. Methanol was purchased from ACROS. Carbon blacks such as NIPex^{®} 35 and NIPex^{®} 150 were purchased from Evonik.

### MEP of St using SteaMA as co-stabilizer (examples 1-2)

The details of the performed experiments and the results of the analytical investigations are summarized in Table 1.

4.27 g of purified St, 0.929 g SteaMA (98%), and 0.146 g AIBN were weighted. After mixing by shaking the organic phase the required amounts of surfactant SDS (0.056 g) and water (41.6 g) were added. Then the mixture was slowly stirred with ca. 150 rpm under N₂ (the needle for purging with N₂ was not in the mixture, very small stream of N₂, less than 1 bubble/second) for 15 min. During this time the SDS was dissolved in water. A formation of pre-emulsion was not observed because of the slow stirring. Then the mixture was stirred under N₂ at 800 min⁻¹ for 30 min to prepare the pre-emulsion using a glass stirrer. The distance between top side fastener stirrer and lower side of the fastener motor was measured and used in further experiments. So the stirring conditions were comparable. After 30 min the mixture was transferred to the sonifier. During this a moderate stream of N₂ was applied. The miniemulsion was prepared by sonication of the pre-emulsion for 600s (level 7, pulse, duty cycle 50%) with an ultrasonic disintegrator Branson 450W using a ½" minitip. The connection between vessel and tip was realized by a special Teflon adapter. Due to the adapter a tight connection between minitip and vessel could be realized.

During all operations the vessel was purged with a slight stream of nitrogen. A cooling of the reaction vessel by ice water was performed during the sonication in order to avoid a heating of the mixture. The reaction vessel with the formed miniemulsion was transferred to the preheated thermostat (66°C). The reaction was performed at 400 min⁻¹ for 3h. Then the mixture was cooled to room temperature within 5 min using ice-water. Before the storage of the dispersion, ca. 200 mg of a 1 wt% solution of HQ in water was added and the mixture was shaken.

### Removal of Coagulum

After the polymerization, the formed dispersion was poured through a mesh (pore size 20 µm x 20 µm) and then used for the analytical investigations. Finally, the rest in the mesh and the rests from the stirrer and the vessel were transferred into a frit using water. The coagulum was washed with water and dried in vacuum at room temperature in order to determine the quantity of coagulum.

### Determination of conversion

Three samples of 2 g of the formed dispersion were weighted in a petri dish and kept overnight at room temperature. The air dried products were dried in vacuum at room temperature until the weight was constant. P₄O₁₀ was used as drying agent in the vacuum oven.

### Size exclusion chromatography (SEC)

SEC measurements were performed with an apparatus of the Agilent Series 1100 (RI detection, 1PL_MIXED-B-LS-column [7,5x300mm] and 10µm PSt gel Agilent column, Chloroform 1.0mL/min). Polystyrene was used as standard. This was the standard method for all of the samples. The samples containing CB were filtrated to remove the CB before the analysis. The error of the method is about 10 %. Results are shown in Tables 2 and 3.

### Particle size measurements

The particle size measurements were performed with a Zetasizer NANO S (Malvern) at a fixed scattering angle of 173°. The given values are the zₐᵥₑ (intensity based). The error of the measurements is about 5 %. Higher values of PDI mean that the particle size distribution becomes broader as shown in Table 2.

### Preparation of samples for the DLS measurements:

The measurements were performed in 0.01 N NaCl solutions according to the Malvern recommendation for the measurements of latex standards. For the experiments with 20wt% solid content ca. 250 mg of the dispersion was weighted and ca. 20g of 0.01 N NaCl solution was added. For the samples with lower solid content (10 or 15 wt%) the amount of NaCl solution was proportionally reduced to keep the concentration of the thinned dispersions nearly constant. The particle sizes of 3 samples were estimated, every of them was consecutively measured twice. In few cases the application of sodium chlosirde (NaCl) solution led to a precipitation of the dispersion. Therefore, the dispersion was thinned only with pure Millipore water.

### Scanning electron microscopy (SEM)

The SEM investigations were performed with an Ultra 55 plus (Zeiss). The thinned dispersions from the DLS measurements were used to prepare the samples. One drop was placed on a C-pad or a wafer. After air drying the samples were sputtered with 3 nm Pt.

### Preparation of PSt/CB composite particle using SteaMA and different surfactants

Two different CB types NIPex®35 and NIPex®150 (Evonik) were selected for the preparation of PSt/CB composites. But the invention is not limited to these CB types. NIPex®35 is a non-oxidized, low structure furnace black with a mean primary particle size of about 31 nm and a pH value of about 9 (according to DIN ISO 787/9). NIPex®150 is a high structure oxidized gas black with a mean primary particle size of about 25 nm and a pH value of about 4 (according to DIN ISO 787/9).

### MEP of St using SteaMA as co-stabilizer (examples 1-2, Table1)

The details of the performed experiments and the results of the analytical investigations are summarized in Table 1. 4.27 g of purified St, 0.929 g SteaMA (98%), and 0.146 g AIBN were weighted. After mixing by shaking the organic phase the required amounts of surfactant SDS (0.056 g) and water (41.6 g) were added. Then the mixture was slowly stirred with ca. 150 rpm under N₂ (the needle for purging with N₂ was not in the mixture, very small stream of N₂) for 15 min. During this time the SDS was dissolved in water. A formation of pre-emulsion was not observed because of the slow stirring. Then the mixture was stirred under N₂ at 800 min⁻¹ for 30 min to prepare the pre-emulsion using a glass stirrer. The distance between top side fastener stirrer and lower side of the fastener motor was measured and used in further experiments. So the stirring conditions were comparable. After 30 min the mixture was transferred to the sonifier. During this a moderate stream of N₂ was applied. The miniemulsion was prepared by sonication of the pre-emulsion for 600s (level 7, pulse, duty cycle 50%) with an ultrasonic disintegrator Branson 450W using a ½" minitip. The connection between vessel and tip was realized by a special Teflon adapter. Due to the adapter a tight connection between minitip and vessel could be realized. During all operations the vessel was purged with a slight stream of nitrogen. A cooling of the reaction vessel by ice water was performed during the sonication in order to avoid a heating of the mixture. The reaction vessel with the formed miniemulsion was transferred to the preheated thermostat (66°C). The reaction was performed at 400 min⁻¹ for 3h. Then the mixture was cooled to room temperature within 5 min using ice-water. Before the storage of the dispersion, ca. 200 mg of a 1 wt% solution of HQ in water was added and the mixture was shaken. Example 0 was prepared in a similar manner.

### Preparation of PSt/CB composite particle using SteaMA and different surfactants

Two different CB types NIPex®35 and NIPex®150 (Evonik) were selected for the preparation of PSt/CB composites. But the invention is not limited to these CB types. NIPex®35 is a non-oxidized, low structure furnace black with a mean primary particle size of about 31 nm and a pH value of about 9 (according to DIN ISO 787/9). NIPex®150 is a high structure oxidized gas black with a mean primary particle size of about 25 nm and a pH value of about 4 (according to DIN ISO 787/9).The procedure described in above paragraph was repeated using the recipe described in the 2^{nd} part of Table 1 (from example 3). The CB was added to the organic phase at the beginning and the organic phase was shaken. Then water and the surfactant were added to the mixture which was processed as described above.

**Table 1 shows recipes for the MEP of Styrene using SteaMA as co-stabilizer**

| Sample | Water | Styrene | Surfactant | | Co-stabilizer | | AIBN | Filler | | | CCA | |
|---|---|---|---|---|---|---|---|---|---|---|---|---|
| | [g] | [g] | Type | [mg] | Type | [mg] | [mg] | Type | [mg] | wt%^{#} | Type | [mg] |
| 0 (Reference) | 37.7 | 8.6 | SDS | 103 | HD | 359 | 269 | Without | 0 | | without | 0 |
| 1 (Reference) | 41.6 | 4.3 | SDS | 56 | SteaM A | 929 | 146 | Without | 0 | | without | 0 |
| 2 (Reference) | 41.6 | 4.3 | SDS | 52 | SteaM A | 955 | 140 | without | 0 | | without | 0 |
| 3* (Reference) | 28.09 | 6.4 | SDS | 76 | HD | 264 | 199 | CB150 | 344 | 5.4 | without | 0 |
| 4 | 41.6 | 4.3 | SDS | 52 | SteaM A | 979 | 133 | CB150 | 214 | 5.0 | without | 0 |
| 5 | 41.6 | 4.3 | SDS | 52 | SteaM A | 959 | 134 | CB150 | 344 | 8.0 | without | 0 |
| 6 | 41.6 | 4.3 | SDS | 53 | SteaM A | 927 | 135 | CB150 | 345 | 10.0 | without | 0 |
| 8 | 41.6 | 4.3 | SDS | 53 | SteaM A | 934 | 136 | CB150 | 429 | 5.0 | without | 0 |
| 9 | 41.6 | 4.3 | SDS | 52 | SteaM A | 935 | 134 | CB35 | 214 | 5.0 | without | 0 |
| 10 | 41.6 | 4.3 | SDS | 54 | SteaM A | 932 | 137 | CB90 | 215 | 5.0 | without | 0 |
| 11 | 37.7 | 8.6 | SDS | 103 | HD | 356 | 268 | CB150 | 428 | 5.0 | MEC-88 | 86 |
| 12 | 37.7 | 8.6 | SDS | 103 | HD | 357 | 268 | CB150 | 428 | 5.0 | MEC-105 | 86 |
| 13 | 41.6 | 4.3 | SDS | 51 | SteaM A | 926 | 134 | CB150 | 214 | 5.0 | MEC-88 | 467 |
| 14 | 41.6 | 4.3 | SDS | 52 | SteaM A | 926 | 134 | CB150 | 214 | 5.0 | MEC-105 | 429 |

| | | | | | | | | | | | | |
|---|---|---|---|---|---|---|---|---|---|---|---|---|
| * sonication 20 min at 90% duty, polymerization for 6h ^{#} based on styrene | | | | | | | | | | | | |

**Table 1 shows results for the MEP of St in the presence of SteaMA**

| Example | Particle size DLS | | SEC | | | Conversion [%] | Coagulum [%] |
|---|---|---|---|---|---|---|---|
| | z-ave [nm] | PDI | Mₙ [g/mol] | M_{w} [g/mol] | M_{w}/Mₙ | | |
| 0 (Reference) | 78 | 0.06 | 149000 | 693000 | 4.7 | 94 | 0.3 |
| 1 (Reference) | 72 | 0.06 | 121000 | 1370000 | 11,3 | 96 | 0.2 |
| 2 (Reference) | 73 | 0.05 | 105000 | 889000 | 8,5 | 97 | 0.2 |
| 3 (Reference) | 98 | 0.18 | 105000 | 571000 | 5.4 | 95 | 1.0 |
| 4 | 92 | - | 96000 | 1375000 | 14.3 | 96 | 0.2 |
| 6 | 100 | - | 169000 | 1820000 | 10,8 | 94 | 1.6 |
| 8 | 103 | - | 157000 | 1690000 | 10,8 | 93 | 1.6 |
| 9 | 96 | - | 178000 | 1870000 | 10,5 | 96 | 0.7 |
| 10 | 90 | - | 148000 | 1675000 | 11,3 | 93 | 2.1 |

**Table 2 shows results obtained for PSt/CB composites using HD or SteaMA as co-stabilizer in the presence of CCA.**

| Sample | Particle size DLS | | SEC | | | Conversion [%] | Coagulum [wt%] |
|---|---|---|---|---|---|---|---|
| | z-ave [nm] | PDI | Mₙ [g/mol] | M_{w} [g/mol] | M_{w}/Mₙ | | |
| 11 | 109^{a} | - | 115000 | 517000 | 4.5 | 96 | 2.4 |
| 12 | 103^{a} | - | 115000 | 473000 | 4.1 | 96 | 0.6 |
| 13 | 94^{b} | - | 145000 | 1633000 | 11.3 | 104 | 0.7 |
| 14 | 118° | - | 109000 | 1677000 | 15.4 | 97 | 0.1 |

| | | | | | | | |
|---|---|---|---|---|---|---|---|
| ^{a} Unmodified CB and larger agglomerates could be observed by SEM ^{b} Unmodified, non-encapsulated CB could not be identified by SEM. Few agglomerates in of about 200 nm were observed. | | | | | | | |

## Claims

1. A composition, comprising: a monomer;
a reactive co-stabilizer; a carbon black;
a surfactant; and
a filler,
wherein the composition is used to prepare a polymer/carbon black composite particle by miniemulsion polymerization (MEP) technology.

2. The composition according to claim1, wherein the monomer is a styrene.

3. The composition according to claim 1, wherein the reactive co-stabilizer is a methacrylate derivative.

4. The composition according to claim 3, wherein the methacrylate derivative comprises a long alkyl chain R, with Formula 1.

5. The composition according to claim 3, wherein the methacrylate derivative is a stearyl methacrylate (SteaMA).

6. The composition according to claim 1, wherein size of the composite particle is in the range of 20 nm to 1000 nm.

7. The composition according to claim 6, wherein size of the composite particle is in the range of 50 nm to 300 nm.

8. The composition according to claim 1, wherein the polymer/carbon black composite particle is prepared in the presence of a charge control agent.

9. The composition according to claim 8, wherein the charge control agent is a bi-salicylate of aluminium or zirconium.

10. The composition according to claim 1, wherein the composition is used to prepare a polystyrene/carbon black composite particle.

11. The composition according to claim 1, wherein the composition is used as a basic resin in a toner application.
